# EUROPEAN PATENT APPLICATION

(11) **EP 4 760 514 A1**
(43) Date of publication of application: **17.06.2026**
(21) Application number: 25221551.2
(22) Date of filing: 08.12.2025
(51) Int. Cl.: G06F 12/084, G06F 12/14

(54) **DATA PROCESSING SYSTEM WITH CACHE INVALIDATION IN A SHARED CACHE**

(30) Priority: 12.12.2024 US 202418978456
(71) Applicant: NXP USA, Inc., Austin, TX 78735 (US)
(72) Inventor: Al-Sadi, Ahmad Riyad Mohammad, 5656AG Eindhoven (NL); Knezevic, Miroslav, 5656AG Eindhoven (NL); Pattamatta, Durgesh, 5656AG Eindhoven (NL)
(74) Representative: Krott, Michel

(57) **Abstract**

A data processing system includes a shared memory, a plurality of execution environments (EEs) which access the shared memory, and a cache which caches information stored in the shared memory. A first encryption engine is coupled between the plurality of EEs and the cache, and a second encryption engine is coupled between the cache and the shared memory. An encryption control circuit is configured to store a unique key corresponding to each EE of the plurality of EEs and provide a current EE key uniquely corresponding to a currently executing EE of the plurality of EEs to the first and second encryption engines. Any data loaded into the cache during execution of the currently executing EE is encrypted using the current EE key and stored as encrypted data in the cache, and any data returned from the cache to the currently executing EE is decrypted using the current EE key.

## Description

### Background

### Field

This disclosure relates generally to data processing systems, and more specifically, to cache invalidation in a shared cache.

### Related Art

Many data processing systems today, such as System on Chips (SoCs), offer the capability of more than one execution environment to share common hardware resources. In many cases, for security reasons, strict isolation between execution environments is important, in which no execution environment should have access to another environment's instruction or data sets. One resource that is commonly shared between execution environments is a cache. Unrestricted access to the shared cache could possibly allow an incoming execution environment to have access to a preceding execution environment's memory, via the shared cache, that would otherwise not be possible. Therefore, a need exists for improved protection of the information stored in a shared cache from being accessed by subsequent execution environments.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in block diagram form, a data processing system having a shared memory and shared cache, encryption engines, and an encryption control circuit, in which the data processing system includes multiple execution environments, in accordance with one embodiment of the present invention.
FIG. 2 illustrates, in block diagram form, a more detailed view of the encryption control circuit of FIG. 1, in accordance with an embodiment of the present invention.
FIG. 3 illustrates, in diagrammatic form, an example cache entry within the shared cache of FIG. 1, in accordance with an embodiment of the present invention.
FIG. 4 illustrates, in flow diagram form, a method of operating the data processing system of FIG. 1, in accordance with an embodiment of the present invention.

### Detailed Description

In one aspect, in order to protect an execution environment's cached data within a shared cache from being accessed by a subsequent execution environment, a cache invalidation method is provided by applying encryption to data to be stored within the shared cache and applying decryption to data read from the shared cache. The encryption and decryption is performed using a specific key corresponding to the currently executing execution environment (EE). In this manner, without the correct key, any data read from the shared cache cannot be properly decrypted. In one embodiment, each execution environment results in selecting or generating a corresponding key that is specific to that execution environment. In this manner, when an execution environment is currently executing, it can use its corresponding key to access the shared cache while any data stored within the shared cache by the currently executing execution environment cannot be successfully accessed using the corresponding key of any other execution environment.

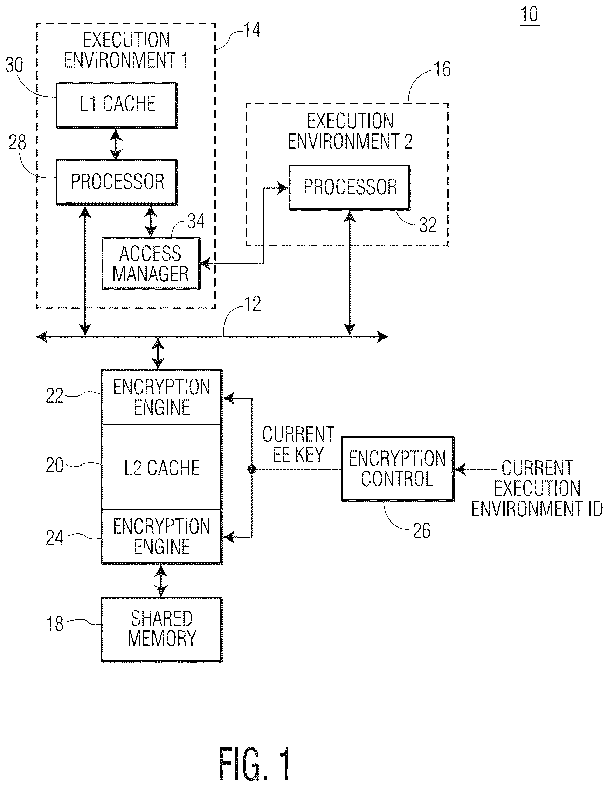

FIG. 1 illustrates a data processing system 10 having processors 28 and 32, a level one (L1) cache 30 coupled to processor 28, an interconnect 12, a level two (L2) cache 20, encryption engines 22 and 24, an encryption control circuit 26, and a shared memory 18 (in which both L1 cache 30 and L2 cache 20 correspond to shared memory 18), in accordance with an embodiment of the present invention. Processor 28, processor 32, and cache 20 (via encryption engine 22) are bidirectionally coupled via interconnect 12. Shared memory 18 is coupled to cache 20 (via encryption engine 24). Shared memory 18 may be any type of cacheable memory, such as, for example, a static random access memory (SRAM), dynamic random access memory (DRAM), flash, etc., and is the backing store for caches 20 and 30. That is, each of caches 20 and 30 are configured to cache information stored in shared memory 18.

Data processing system 10 may be implemented as an SoC, and may therefore be referred to as SoC 10. SoC 10 includes multiple execution environments, including execution environment 1 (EE 1) 14 which includes L1 cache 20, processor 28, and an access manager 34, and execution environment 2 (EE 2) 16 which includes processor 32. Although only two execution environments (EEs) are illustrated, SoC 10 may include any number of EEs. Each EE, including EE 1 and EE 2, may include any number of elements in addition to or in place of a processor. For example, each may include any number of processors, cores, central processing units (CPUs), local buses, peripherals input/output (I/O) ports, memories, etc. Also, in alternate embodiments, a single core with a single cache may include any number of EEs. Each EE may include resources specific to that EE (for example, processor 28 and L1 cache 30 are exclusive to EE 1), and SoC 10 may include resources which are shared between EEs (for example, shared memory 18 and L2 cache 20 are shared between EE 1 and EE 2. Note that, in alternate embodiments, a processor of an EE may include a local L1 cache as a lower level cache to store recently access information for shared memory 18, in which a local L1 cache has a quicker access time as compared to the L2 cache. In one embodiment, L1 cache 30 is not present, in which only L2 cache 20 is used to store recently accessed information for shared memory 18. Therefore, SoC 10 may include any number and level of caches, as needed. For example, SoC 10 may include other local or shared memories with one or more corresponding caches. As used herein, note that L2 cache 20 may be referred to as shared cache 20 or simply cache 20. Interconnect 12 and any local interconnects within an execution environment may be implemented using any type of interconnect as known in the art, such as a bus, crossbar switch, etc.

Any element or device in SoC 10 which is capable of generating access requests to shared memory 18 may be referred to as a requestor (i.e. master). For example, each of processor 28 of EE 1 and processor 32 of EE 2 are requestors which generate read and write access requests to shared memory 18. Each of these read and write request are first provided to cache 20 to determine if the request can be serviced more quickly by cache 20. For example, for each access request, a portion of the access address of the access request is compared against tag addresses of cache 20 to determine if a cache hit or miss occurs, as known in the art. In the case of a hit to an entry of cache 20, the read or write can be serviced directly from cache 20. For example, for a read, this includes returning the read data from the hit entry of the cache 20 rather than having to access memory 18, and for a write, this includes writing the write data into cache 20 which is either written to memory 18 at the time of the cache hit (e.g. for a write-through cache) or is written back to memory 18 at a later time (e.g. for a copyback cache). However, in the case of a miss, the read or write is serviced from memory 18.

Cache 20 can be updated with new cache data, as needed, from memory 18. For example, cache 20 can be updated in response to read or write access requests which miss in the cache or when prefetching data from memory 18 into the cache. Updating cache 20 may include allocating a new cache line in accordance with the cache's allocation policy, as known in the art. Note that cache 20 can be any type of cache (e.g. instruction or data cache, direct-mapped cache, fully associative cache, set associative cache, or the like) and any type of cache policies can be used to implement cache 20. Cache 20 itself, between encryption engines 22 and 24, can therefore operate as known in the art, and includes known control circuitry to manage accesses to the cache (e.g. determining hits/misses, updating the cache, performing cache operations such as flushes and invalidations, etc.). However, prior to storing any new data into cache 20, it is first encrypted by a corresponding key, and prior to returning and data from cache 20 to a requestor, it is first decrypted by a corresponding key, as will be described in more detail below.

In one embodiment, each EE may have a corresponding identifier, referred to as an EE ID. In the example of FIG. 1 in which each EE includes one requestor, the current EE ID may refer to the ID of the requestor (e.g. processor 28 or 30) making the request. The current EE ID may be provided as a hardware signal available within SoC 10 to encryption control circuit 26. When the currently executing EE changes from one EE to another, the current EE ID is also updated. In one embodiment, one of the EEs in SoC 10 (such as, for example, a trusted EE) may control which EE is currently executing and when to transfer control to a different EE. In the illustrated embodiment of FIG. 1, EE 1 includes access manager 34 (which may be implemented as a hardware block) which is controlled by software executing on processor 28 to control which EE has control of SoC 10 (i.e. which EE has access rights to any shared resources), in which access manager 34 provides the current EE ID to SoC 10. In one embodiment, access manager 34 also controls or limits access to interconnect 12 by each of the EEs so as, for example, to prevent an EE from freely snooping interconnect 12 after decryption.

Encryption engine 22 is coupled between cache 20 and each of EE 1 and EE 2, and encryption engine 24 is coupled between cache 20 and shared memory 18. Encryption control circuit 26 is coupled to encryption engines 22 and 24, in which encryption control circuit 26 receives the current EE ID, and provides a corresponding current EE key to each of encryption engines 22 and 24. Each of encryption engines 22 and 24 are capable of encrypting and decrypting data using the received current EE key. In one embodiment, any data written into cache 20 from shared memory 18 is first encrypted by encryption engine 24 and stored as encrypted cache data in cache 20, and any data provided from cache 20 back onto interconnect 12 is first decrypted by decryption engine 22 and returned as normal (decrypted) data. In one embodiment, encryption engines 22 and 24 are implemented as symmetric, single-cycle encryption/decryption engines, in which these engines are located between a requestor (e.g. processor 28 or 30) and cache 20 and between cache 20 and the higher-level memory (e.g. shared memory 18). In this manner, as will be described below, data stored into and read from cache 20 can be protected and invalidated, as needed.

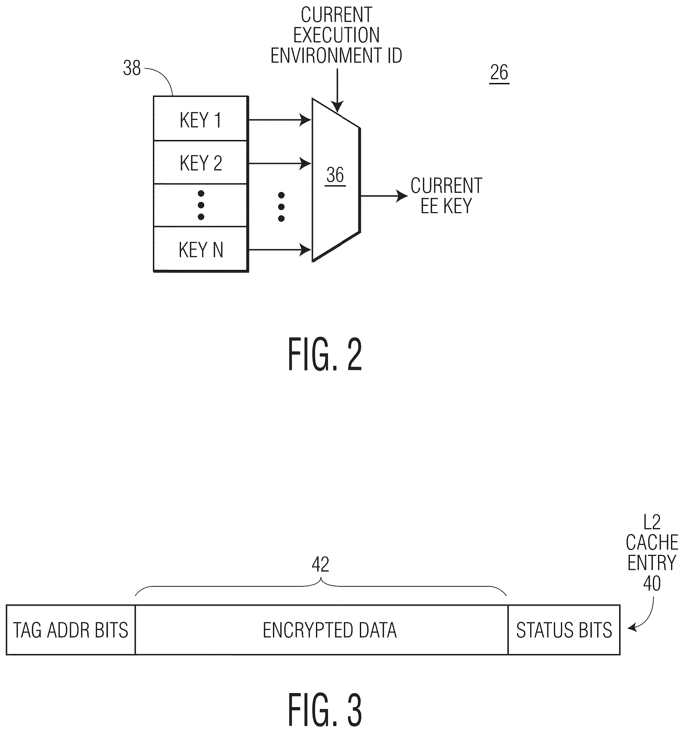

In one embodiment, assuming there are N EEs which can execute within SoC 10 (although only two are illustrated in FIG. 1), a set of N unique keys are pre-generated, in which one unique key is designated for each EE. Note that N can be any integer value greater than or equal to two, and encryption engine 22 is coupled between cache 20 and the N EEs such that any access to cache 20 from any EE is done through encryption engine 22. FIG. 2 illustrates an example of encryption control circuit 26 which may include storage circuitry 38 configured to store the N keys (Key 1 to Key N). A selection circuit 36 (which may be implemented, e.g., as a multiplexer (MUX)) receives the current EE ID at a control input and the N keys from storage circuitry 38 at data inputs, and provides the unique key corresponding to the currently executing EE as the current EE key at its output. The current EE key is provided to encryption engines 22 and 24 for use in encryption and decryption while the current EE is executing. In the illustrated embodiment, only one EE is executing at a time within SoC 10. That is, only one of the N EEs has control of SoC 10 at any given time. However, in alternate embodiments, more than one EE may have control of SoC 10 at various times.

For example, an initial EE which is executing on SoC 10 has control of SoC 10 and thus has access to shared memory 18 and cache 20. The initial EE can be any EE of SoC 10 and refers to the current EE being executed. Therefore, any cached information by this initial EE (in which the cached information may correspond to instructions or data, and be referred to generally as data) is encrypted using its corresponding encryption key, received as the current EE key from encryption control 26. For example, any data stored from shared memory 18 into cache 20 is first encrypted by encryption engine 24 using the current EE key prior to storage into cache 20 and any write data from a requestor of the initial EE to cache 20 is first encrypted by encryption engine 22 using the EE key prior to storage into cache 20. In this manner, all cached data for the initial EE is stored in cache 20 in encrypted form. Note that the currently executing EE which encrypts the data with its corresponding key for storage into cache 20 is considered the owner of the cached information. If the initial EE attempts to access a cached address (such as in response to a read hit in cache 20), the cache data from the hit entry of the cache would first be decrypted by encryption engine 22 using the current EE key, resulting in correct information being returned to the requestor of the initial EE with the proper access rights.

FIG. 3 illustrates, in diagrammatic form, an L2 cache entry 40 representative of a cache entry that has been updated or created by an EE, in accordance with an embodiment of the present invention. Cache entry 40 includes a tag address (addr) bits portion, an encrypted data portion 42, and corresponding status bits. The tag addr bits correspond to an address location of shared memory 18, and the status bits may include one or bits which indicate the status of the cache entry (e.g., whether the entry contains valid data or not, whether the cache data of the entry is dirty or coherent with memory 18, etc.) In the example of the initial EE above, if cache entry 40 is being updated, the cache data is encrypted with the EE key corresponding to the initial EE, and this encrypted cache data is stored within encrypted data portion 42 of the cache entry. Note that, in the illustrated embodiment, only the cache data portion (e.g. the instructions or data from memory 18 being cached) is encrypted, while the tag addr bits and status bits are not encrypted.

Upon control of SoC 10 being handed over from the initial EE to a subsequent EE (another EE of SoC 10), encryption control 26 provides the corresponding key of the subsequent EE as the current EE key to encryption engines 22 and 24. Any access by the subsequent EE to any addresses cached by a previous (e.g. initial) EE would be decrypted with a different key from the key which was used for encrypting the data. In this example, the cached data would have been encrypted with the key of the previous EE, but decrypted by the key of the subsequent (now current) EE. In this manner, any information which was cached during the previous EE would be invalidated for the currently executing EE, thus protecting the security of the information previously cached by the initial EE. Note that by invalidating the cache data of the initial EE (or any previous EE) in this manner, it is not necessary to flush or invalidate the cache entries each time control is handed over to a new EE. That is, by changing the current EE key used for encryption/decryption of the cache data with each EE hand-over, the existing cache data is effectively invalidated for all EEs (including the new EE) except for the EE which is the owner of the cached information.

Note that any of the memory encryption engines described herein (e.g. 22 and 24) may be implemented with any known memory encryption engine. Also, any cache within SoC 10, such as any cache for any shared memory, can be protected in this manner. Also, in one embodiment, in addition to storing a key for each of the N EEs, encryption control circuit 26 can generate the N keys and store them.

The cache invalidation method through the use of keys specific to each EE to update cache 20 may allow for improved speed of the invalidated processor. For example, there is no need to spend time flushing or invalidating the cache, thus not requiring extra software overhead. Also, in one embodiment, the current EE key transmission and the encryption/decryption processes can be implemented using encryption/decryption algorithms which take a single clock cycle (such as by using on-the-fly encryption engines), therefore, cache invalidation can be effectively instant and provides immediate isolation of cached data.

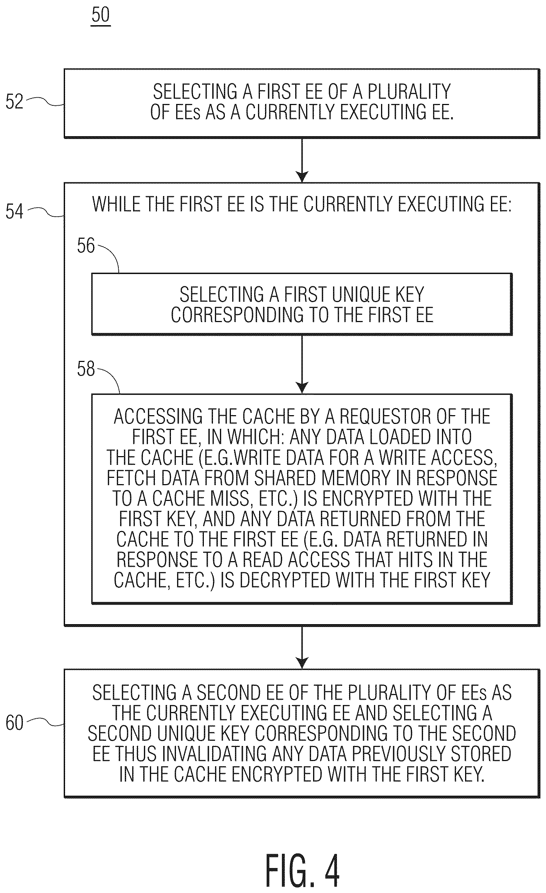

FIG. 4 illustrates, in flow diagram form, a method 50 of operating SoC 10, in accordance with one embodiment of the present invention. At block 52, a first EE (e.g. EE 1) is selected as a currently executing EE. Next, at block 54, while the first EE is the currently executing EE, a first unique key corresponding to EE 1 is selected (at block 56) based on the current executing EE, and cache 20 can be accessed by a requestor (e.g. processor 28) of EE 1 (at block 58). In accessing cache 20, any data loaded into cache 20 is encrypted with the first unique key, and any data returned from the cache to EE 1 is decrypted with the first unique key. For example, data loaded into cache 20 may correspond to write data for a write access from processor 28 to memory 18 which is stored in cache 20, may correspond to data fetched from memory 18 in response to a read access from processor 28 which misses in cache 20, may correspond to prefetches from memory 18 into cache 20, etc. Also, for example, data returned from cache 20 to processor 28 may correspond to data returned in response to a read access that hits in cache 20, etc. Regardless of the reasons why data is loaded into an entry of cache 20, it is first encrypted by the unique key corresponding to the currently executing EE. Similarly, regardless of the reasons whey data is being returned from an entry of cache 20, it is first decrypted by the unique key corresponding to the currently executing EE.

Still referring to FIG. 4, after block 54, method 50 proceeds to block 60 in which a second EE (e.g. EE 2) is selected as the currently executing EE, and therefore, a second unique key corresponding to EE 2 is selected based on the currently executing EE and used for encrypting any data loaded into cache 20 or decrypting any data returned from cache 20. This effectively invalidates any data previously stored in cache 20 which was encrypted with the unique key corresponding to EE 1 (or any data previously stored in cache 20 which was encrypted with the unique key of any of the other EEs). Note that this invalidation is accomplished without the need to perform an explicit flush or invalidation operation on cache 20 in response to handing control over to a new EE.

Therefore, by now it can be understood how the use of specific keys for each EE allow for protection of cached data in a shared cache by effectively invalidating the cache data for all EEs except for the EE which owns the cached data. That is, without access to the proper key for decrypting data accessed from a hit entry of the shared cache, a currently executing EE cannot access any cached data that was encrypted and cached by another EE. In this manner, cache data is effectively invalidated, but without requiring the overhead of flushing or invalidating the shared cache upon each hand-over of control to a subsequent EE. Therefore, improved protection of data stored in a shared cache may be achieved.

As used herein, the term "bus" is used to refer to a plurality of signals or conductors which may be used to transfer one or more various types of information, such as data, addresses, control, or status. The conductors or lines as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Some of the above embodiments, as applicable, may be implemented using a variety of different information processing systems. For example, although FIG. 1 and the discussions thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Also for example, in one embodiment, the illustrated elements of data processing system 10 are circuitry located on a single integrated circuit or within a same device. Alternatively, system 10 may further include any number of separate integrated circuits or separate devices interconnected with each other. For example, memories, peripherals, etc., may be located on a same integrated circuit as processors 28 and 32 or on separate integrated circuits or devices.

Furthermore, those skilled in the art will recognize that boundaries between the functionality of the above described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, any type of core may be used in place of processors 28 and 32. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

The following are various embodiments of the present invention. Note that any of the aspects below can be used in any combination with each other and with any of the disclosed embodiments.

In an embodiment, a data processing system includes a shared memory; a plurality of execution environments (EEs) configured to access the shared memory; a cache configured to cache information stored in the shared memory; a first encryption engine coupled between the plurality of EEs and the cache; a second encryption engine coupled between the cache and the shared memory; and an encryption control circuit configured to store a unique key corresponding to each EE of the plurality of EEs and provide a current EE key uniquely corresponding to a currently executing EE of the plurality of EEs to the first and second encryption engines, wherein any data loaded into the cache during execution of the currently executing EE is encrypted using the current EE key and stored as encrypted data in the cache and any data returned from the cache to the currently executing EE is decrypted using the current EE key. In one aspect of the above embodiment, data loaded into the cache during execution of the currently executing EE comprises write data provided for a write access that is stored as encrypted data using the current EE key. In a further aspect, the write data is encrypted by the first encryption engine. In another aspect, data loaded into the cache during execution of the current executing EE comprises data fetched from the shared memory in response to a cache miss that is stored as encrypted data using the current EE key. In a further aspect, the fetched data is encrypted by the second encryption engine. In another aspect of the above embodiment, data returned from the cache to the currently executing EE comprises data returned in response to a read access that hits in the cache. In a further aspect, the returned data from the cache is decrypted by the first encryption engine using the current EE key. In another aspect, the encryption control circuit is configured generate each unique key. In another aspect, each of the first and second encryption engines perform single-cycle encryption and single-cycle decryption. In yet another aspect, data loaded into the cache is stored as encrypted data into a cache entry of the cache, wherein an address tag portion and status portion of the cache entry are not encrypted. In another aspect, upon selecting a subsequent EE from the plurality of EEs to execute, the encryption control circuit is configured to update the current EE key uniquely corresponding to the currently executing EE of the plurality of EEs to a unique EE key corresponding to the subsequent EE.

In another embodiment, in a data processing system configured to execute a plurality of execution environments (EEs) and having a shared memory and a cache corresponding to the shared memory, a method includes selecting a first EE of the plurality of EEs as a currently executing EE; while the first EE is the currently executing EE: selecting a first unique key corresponding to the first EE, and accessing the cache by a requestor of the first EE, wherein any data loaded into the cache is encrypted with the first unique key and stored as encrypted data into the cache and any data returned from the cache to the first EE is decrypted with the first unique key; and selecting a second EE of the plurality of EEs as the currently executing EE and selecting a second unique key corresponding to the second EE, wherein any data returned from the cache to the second EE is decrypted using the second unique key so as to invalidate any data previously stored in the cache encrypted by the first unique key. In one aspect of the another embodiment, when returned data from the cache to the second EE is provided from a cache entry which was updated when the first EE was the currently executing EE, the decrypted data is not properly decrypted thus invalidating data of the cache entry. In another aspect, data loaded into the cache while the first EE is executing comprises write data provided for a write access that is stored as encrypted data using the first unique key. In another aspect, data loaded into the cache while the first EE is executing comprises data fetched from the shared memory in response to a cache miss that is stored as encrypted data using the first unique key. In another aspect, data returned from the cache to the currently executing EE comprises data returned in response to a read access that hits in the cache. In yet another aspect, the method further includes generating each of the first and second unique key. In another aspect, the method further includes storing a unique key for each EE of the plurality of EEs within an encryption control circuit. In another aspect of the another embodiment, the encrypting is performed using single-cycle encryption and the decrypting is performed using single-cycle decryption. In another aspect, no flush or invalidation operations are performed in the cache in response switching the current execution EE from the first EE to the second EE.

## Claims

1. A data processing system, comprising:
a shared memory;
a plurality of execution environments (EEs) configured to access the shared memory;
a cache configured to cache information stored in the shared memory;
a first encryption engine coupled between the plurality of EEs and the cache;
a second encryption engine coupled between the cache and the shared memory; and
an encryption control circuit configured to store a unique key corresponding to each EE of the plurality of EEs and provide a current EE key uniquely corresponding to a currently executing EE of the plurality of EEs to the first and second encryption engines, wherein any data loaded into the cache during execution of the currently executing EE is encrypted using the current EE key and stored as encrypted data in the cache and any data returned from the cache to the currently executing EE is decrypted using the current EE key.

2. The data processing system of claim 1, wherein the data loaded into the cache during execution of the currently executing EE comprises write data provided for a write access that is stored as encrypted data using the current EE key.

3. The data processing system of claim 2, wherein the write data is encrypted by the first encryption engine.

4. The data processing system of any preceding claim, wherein the data loaded into the cache during execution of the current executing EE comprises data fetched from the shared memory in response to a cache miss that is stored as encrypted data using the current EE key.

5. The data processing system of claim 4, wherein the fetched data is encrypted by the second encryption engine.

6. The data processing system of claim 1, wherein the data returned from the cache to the currently executing EE comprises data returned in response to a read access that hits in the cache.

7. The data processing system of claim 6, wherein the returned data from the cache is decrypted by the first encryption engine using the current EE key.

8. The data processing system of any preceding claim, wherein the encryption control circuit is configured generate each unique key.

9. The data processing system of any preceding claim, wherein each of the first and second encryption engines perform single-cycle encryption and single-cycle decryption.

10. The data processing system of any preceding claim, wherein the data loaded into the cache is stored as encrypted data into a cache entry of the cache, wherein an address tag portion and status portion of the cache entry are not encrypted.

11. The data processing system of any preceding claim, wherein upon selecting a subsequent EE from the plurality of EEs to execute, the encryption control circuit is configured to update the current EE key uniquely corresponding to the currently executing EE of the plurality of EEs to a unique EE key corresponding to the subsequent EE.

12. A method for use in a data processing system configured to execute a plurality of execution environments (EEs) and having a shared memory and a cache corresponding to the shared memory, the method comprising:
selecting a first EE of the plurality of EEs as a currently executing EE;
while the first EE is the currently executing EE:
selecting a first unique key corresponding to the first EE, and
accessing the cache by a requestor of the first EE, wherein any data loaded into the cache is encrypted with the first unique key and stored as encrypted data into the cache and any data returned from the cache to the first EE is decrypted with the first unique key; and
selecting a second EE of the plurality of EEs as the currently executing EE and selecting a second unique key corresponding to the second EE, wherein any data returned from the cache to the second EE is decrypted using the second unique key so as to invalidate any data previously stored in the cache encrypted by the first unique key.

13. The method of claim 12, wherein when returned data from the cache to the second EE is provided from a cache entry which was updated when the first EE was the currently executing EE, the decrypted data is not properly decrypted thus invalidating data of the cache entry.

14. The method of claim 12 or 13, wherein the data loaded into the cache while the first EE is executing comprises write data provided for a write access that is stored as encrypted data using the first unique key.

15. The method of any one of claims 12 to 14, wherein the data loaded into the cache while the first EE is executing comprises data fetched from the shared memory in response to a cache miss that is stored as encrypted data using the first unique key.
